# EUROPEAN PATENT SPECIFICATION

(11) **EP 4 457 137 B1**
(45) Date of publication and mention of the grant of the patent: **28.10.2026**
(21) Application number: 22917014.7
(22) Date of filing: 10.11.2022
(51) Int. Cl.: B64C 7/00, B64C 27/04, B64D 43/00

(54) **A HELICOPTER**
HUBSCHRAUBER
HÉLICOPTÈRE

(30) Priority: 29.12.2021 TR 202121505
(43) Date of publication of application: 06.11.2024
(73) Proprietor: Tusas- Turk Havacilik Ve Uzay Sanayii Anonim Sirketi, 06980 Ankara (TR)
(72) Inventor: BACANAK, Murat, 06980 Kahramankazan/Ankara (TR)
(74) Representative: Berkkam, Ayfer
(86) International application number: PCT/TR2022/051278
(87) International publication number: WO 2023/129011

(56) References cited:
- WO-A1-2020/064577
- WO-A2-2008/119144
- US-A- 5 918 834
- US-A- 5 918 834
- US-A1- 2009 285 055
- US-A1- 2015 307 202
- US-A1- 2016 325 816
- US-A1- 2017 327 243

## Description

The present invention relates to a helicopter comprising movable sensors on its body.

Sensors are provided in various positions on the helicopter body. These sensors are used to obtain data on different subjects such as obtaining flight data, detecting external threats, etc. Sensors are usually located on an outer surface of helicopters. Placement of the sensors can be performed based on factors such as sensor shading, structural factors, temperature, etc. In a sufficient area suitable for placement, the sensors are mounted on the helicopter body. In flight, the sensors located on the outer surface of the helicopter cause aerodynamic drag.

The United States patent application US5918834A, which is part of the state of the art, discloses an air vehicle sensor system and a retractable sensor system for the air vehicle. The sensor moves from a retracted position to an extended position. Reinforced elastomer sections on the plane's die line surface cover the sensor and actuation mechanism. The reinforced elastomer section has an inner surface and an outer surface. The sensor is located adjacent to the inner surface. The reinforced elastomer section has a flat position and an extended position.

The United States patent application US2009285055A1, which is part of the state of the art, discloses a sensor assembly suitable for use in an airborne shooter localization system. The sensor assembly has a pressure sensor subassembly with a pressure transducer positioned to detect pressure variations associated with a shock wave from a passing projectile or the muzzle blast following the shock wave. To substantially increase the signal to noise ratio for measurements of the shock wave, the pressure sensor subassembly attenuates pressure fluctuations triggered by turbulent airflow over the surface of the subassembly more than it attenuates the shock wave. This preferential attenuation is provided by separating the pressure transducer from the surface of the sensor assembly by a cavity large enough that the pressure fluctuations are substantially attenuated as they propagate across the cavity.

Thanks to a helicopter according to the present invention, sensors located on an outer surface of the helicopter are enabled to be sealed.

An object of the invention is to prevent the sensors located on the outer surface of the helicopter from being damaged by external factors such as dust, sand, or rain water.

Another object of the present invention is to enable mission sensors located on the outer surface of the helicopter to receive data both in inner and outer areas of the helicopter body.

A further object of the present invention is to enable the sensors located on the outer surface of the helicopter to be received into the body when not in use, thereby reducing aerodynamic drag.

The helicopter realized to achieve the object of the invention, which is defined in the first claim and other claims dependent thereon, comprises a body; a cut out located on the body. A sensor is located on the body to be movable outwards from the cut out, the sensor enabling the data requested by a user to be received. There is a control unit that controls operation of the sensor. The helicopter comprises a first position (I) in which the sensor is located in the cut out; and a second position (II) in which the sensor extends outward from the body, wherein the sensor is moved outwards through the cut out to be brought to the second position (II).

The helicopter according to the invention comprises a sensor surface that allows the sensor to receive data. The sensor surface is a part of the sensor that faces out of the body and is located outside the body in contact with the aerodynamic air. There are multiple lateral walls extending from the sensor surface into the body. The lateral walls extend from front surface walls into the body. A sheath made of a flexible material is provided, which seals the lateral walls in the first position (I) and the second position (II). One side of the sheath is connected to the wall of the cut out, and the other side thereof is connected to the lateral walls. The sheath completely surrounds the lateral walls and can be folded as the sensor moves from the second position (II) to the first position (I). In this way, the sensor is protected by the sheath from environmental factors such as dust, sand or water. When the sensor is in the second position (II), the risk of water entering the helicopter through the cut out area is also avoided. In cases where the sheath is torn, deformed or damaged due to aerodynamic effects, the lateral walls support and protect the sensor.

In an embodiment of the invention, the helicopter comprises the sheath with one end connected to an inner surface of the cut out, and the other end connected to an area between the front surface and the lateral walls. As the sensor moves from the second position (II) to the first position (I), the sheath is folded and/or compressed and received into the cut out. The sheath remains in the cut out in a folded state, thus protecting the sensor from external factors.

In an embodiment of the invention, the helicopter comprises the front surface which is substantially aligned with the wall of the cut out when the sensor is in the first position (I). The front surface is located nearly identical to the wall of the cut out. Therefore, when the sensor is in the first position (I), it is substantially located in the cut out, and the front surface is also aligned with the body surface so as to match with the body surface without gaps.

In an embodiment of the invention, the helicopter comprises the sheath which is compressed such that there is no gap between the walls of the cut out and the sensor when the sensor is in the first position (I). The sheath allows the sensor to be kept still in the cut out, thus preventing aerodynamic effects and absorbing vibrations.

In an embodiment of the invention, the helicopter comprises the front surface which allows the sensor to obtain data in both the first position (I) and the second position (II); and the control unit which controls the data received from the sensor. The front surface is exposed so as to be in direct interaction with the aerodynamic surface, and is not covered with a sheath. The sheath is attached to the lateral walls. In a first position (I), in which the front surface and outer surface of the helicopter body are aligned, the lateral walls are located fully in the cut out in correspondence with the wall of the cut out. In conditions where damage to the lateral walls is possible or when data is required to be obtained quickly, in the first position (I) where the sensor is located in the body, the desired information can be received by the front surface. The control unit controls the data received by the sensor at both positions.

In an embodiment of the invention, the helicopter comprises a support element located partially around the lateral walls, attached to the sensor, and surrounded by the sheath; at least one rail in the cut out, which allows the sensor to slide thereon. There is an actuator, which is preferably in mechanical connection with the support element and can slide on the rail to move into or out of the linear body. The control unit triggers the actuator with the command received by a pilot. When the actuator is activated, the sensor mechanically connected to the support element is brought from the first position (I) to the second position (II) or from the second position (II) to the first position (I).

In an embodiment of the invention, the helicopter comprises a stopper on the rail, which stops and fixes the actuator in alignment with the wall of the cut out in a position predetermined by the user, as the sensor moves from the first position (I) to the second position (II) or from the second position (II) to the first position (I). When the sensor is in the cut out in the first position (I) or when the sensor is moved out of the cut out in the second position, the stopper enables the sensor to stop at end limit positions.

In an embodiment of the invention, the helicopter comprises the actuator, which is any of the hydraulic, pneumatic, or electric motor types.

In an embodiment of the invention, the helicopter comprises the sheath made of a water-resistant leather material. The sheath is preferably made of a flame resistant (Flame Resistant Leather, Cassini 1789, Black) or water-resistant leather material.

In an embodiment of the invention, the helicopter comprises the sensor such as a laser warning system, a missile warning system, an RWR spiral antenna, which is located on the outer surface of the helicopter and allows the data requested by the user to be received.

In an embodiment of the invention, the helicopter comprises the support element produced by an NC production method. The support element is preferably made of an aluminum alloy material. The strong support element provides rigidity to the sensor and protects the sensor in case of possible damage and deformation of the sheath. Further, the support element connected to the sensor by means of mechanical fasteners is triggered by the actuator to move the sensor.

The helicopter realized to achieve the object of the present invention is illustrated in the attached drawings, in which:

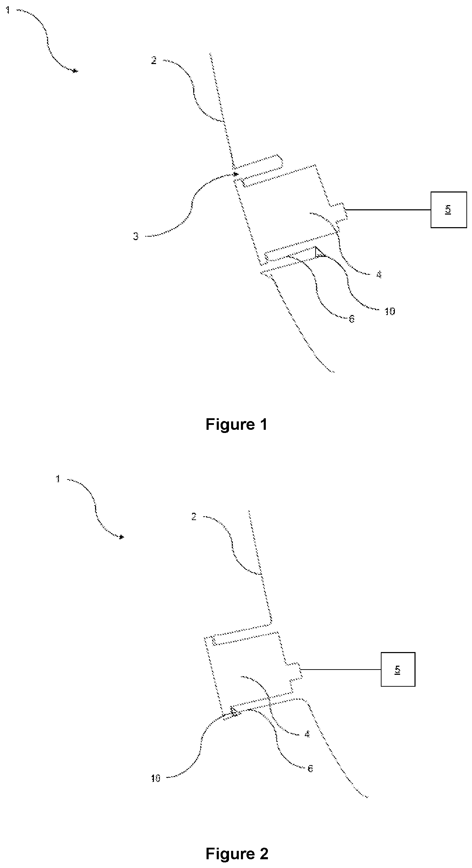

Figure 1 is a schematic view of the sensor and the sheath in the first position (I).
Figure 2 is a schematic view of the sensor and sheath in the second position (II).

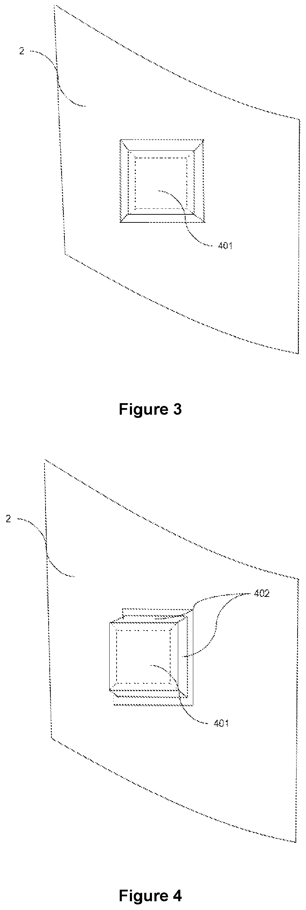

Figure 3 is a schematic view of the sensor in the first position (I).
Figure 4 is a schematic view of the sensor in the second position (II).

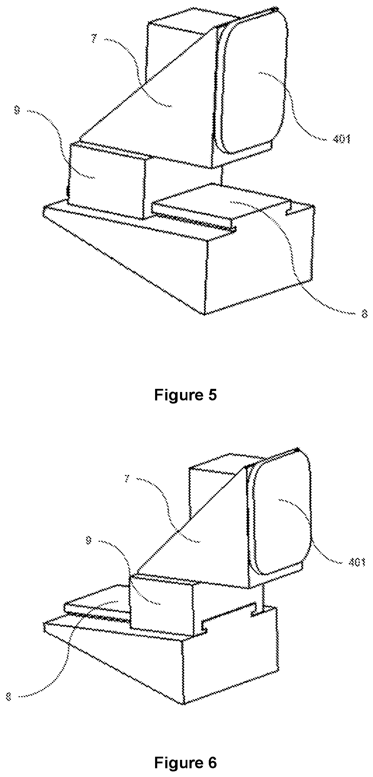

Figure 5 is a perspective view of the sensor, support element, rail, actuator in the first position (I).
Figure 6 is a perspective view of the sensor, support element, rail, actuator in the second position (II).

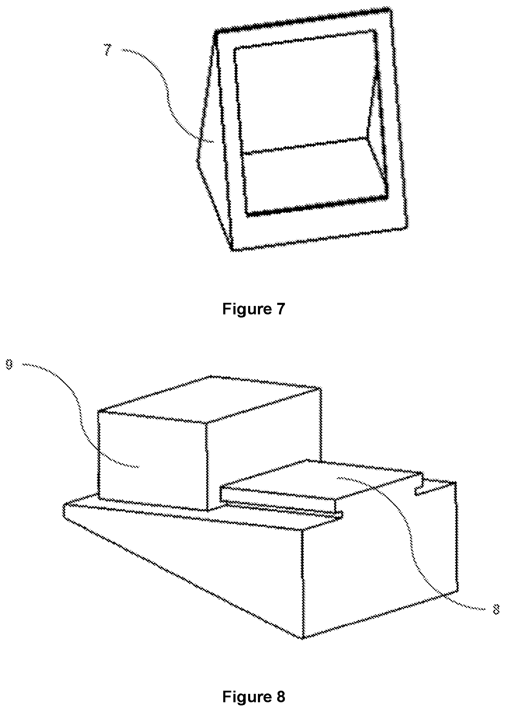

Figure 7 is a perspective view of the support element.
Figure 8 is a perspective view of the rail and the actuator.

All the parts illustrated in figures are individually assigned a reference numeral and the corresponding terms of these numbers are listed below:
1. Helicopter
2. Body
3. Cut out
4. Sensor
   401. Front surface
   402. Lateral walls
5. Control unit
6. Sheath
7. Support element
8. Rail
9. Actuator
10. Stopper
   (I). First position
   (II). Second position

The helicopter (1) comprises a body (2); a cut out (3) located on the body (2); a sensor (4) located in the cut out (3) so as to move outwards from the body (2), and enabling the data requested by the user to be obtained; at least one control unit (5) that controls operation of the sensor (4); a first position (I) in which the sensor (4) is substantially located in the cut out (3); a second position (II) to which the sensor (4) is brought by moving, and in which the sensor (4) extends through the cut out (3) outward from the body (2).

The helicopter (1) according to the invention comprises a front surface (401) which is a part of the sensor (4) facing outward from the body (2), and which allows the sensor (4) to receive data; at least one lateral wall (402) located on the sensor (4), extending from the front surface (401) into the body (2), and allowing the front surface (401) to be held; a sheath (6) made of a flexible material, with one side thereof connected to the wall of the cut out (3) and the other side to the sensor (4) so as to completely surround the lateral walls (402), wherein the sheath (6) can be folded as the sensor (4) moves from the second position (II) to the first position (I), wherein the sheath (6) provides sealing between the sensor (4) and the cut out in the first position (I) and the second position (II).

There are cut outs (3) on the body (2) of the helicopter (1) at certain places. Sensors (4) are provided in the cut out (3), which enable the data requested by the user to be received according to the purpose of use. The sensors (4) are located in the cut out (3) so as to move out of the cut out (3). There is a control unit (5) that controls operation of the sensor (4). There is a first position (I) in which the sensor (4) is located in the cut out (3); and a second position (II) to which the sensor (4) is brought by moving outwardly through the cut out (3), and in which the sensor (4) extends outward from the body (2).

The sensor (4) has a front surface (401) for receiving the desired data. There is a plurality of lateral walls (402) extending from the front surface (401), which is the surface of the sensor (4) facing outward from the body (2), to the inside of the body (2). There is a sheath (6) made of a flexible material, which seals the lateral walls (402) in the first position (I) and the second position (II). One side of the sheath (6) is connected to the wall of the cut out (3) and the other side is connected to the lateral walls (402). The sheath (6) completely surrounds the lateral walls (402). The sheath (6) can be folded as the sensor (4) moves from the second position (II) to the first position (I). Therefore, the sensor is protected by the sheath (6) from environmental factors such as dust, sand or water. When the sensor (4) is in the second position (II), the risk of water entering the body (2) through the cut out (3) region is also prevented.

In an embodiment of the invention, the helicopter (1) comprises the sheath (6) with one end connected to the inner wall of the cut out (3), and the other end connected between the front surface (401) and the lateral walls (402). As the sensor (4) moves from the second position (II) to the first position (I), the sheath (6) is folded and/or compressed and received into the cut out (3) in this form.

In an embodiment of the invention, the helicopter (1) comprises the front surface (401) substantially aligned with the wall of the cut out (3) when the sensor (4) is in the first position (I). The front surface (401) is located almost identical to the wall of the cut out (3). In this way, the sensor (4) is substantially located in the cut out (3) in the first position (I). The front surface (401) is aligned with the outer surface of the body (2), outside the body (2).

In an embodiment of the invention, the helicopter (1) comprises the sheath (6) which is compressed when the sensor (4) is in the first position (I), such that there is no gap between the walls of the cut out (3) and the sensor (4), thus allowing the sensor (4) to be kept still in the opening (3). The sheath (6) allows the sensor (4) to be kept still in the cut out (3), thus preventing aerodynamic effects and absorbing vibrations.

In an embodiment of the invention, the helicopter (1) comprises the front surface (401), which allows the sensor (4) to obtain data both in the first position (I) and in the second position (II); and the control unit (5) which controls the data received from the sensor (4). The front surface (401) interacts directly with the aerodynamic surface and is not covered by the flexible sheath (6). The sheath (6) is attached all around on the lateral walls (402). In adverse conditions or in cases where rapid data acquisition is required, information can be received by the front surface (401) in the first position (I) in which the sensor (4) is located in the body (2). The control unit (5) controls the data received by the sensor (4) at both positions.

In an embodiment of the invention, the helicopter (1) comprises a support element (7) located almost partially around the lateral walls (402), attached to the sensor (4), and surrounded by the sheath (6); at least one rail (8) in the cut out (3), which allows the sensor (4) to slide thereon; at least one actuator (9) which is located in connection with the support element (7) and can slide linearly on the rail (8); the control unit (5) which triggers the actuator (9) upon a command received by the pilot, thus mechanically connected to the support element (7), wherein the control unit (5) allows the sensor (4) to be moved from the first position (I) to the second position (II) or from the second position (II) to the first position (I). The support element (7) is located around the lateral walls (402) so as to be surrounded by the sheath (6) and is mechanically connected to the sensor (4). There is at least one rail (8) in the cut out (3), which allows the sensor (4) to move by sliding. The actuator (9) is provided, which is preferably in mechanical connection with the support element (7) and can move linearly on the rail (8) by sliding. The control unit (5) activates the actuator (9) upon the command received by the pilot. When the actuator (9) is activated, the support element (7) is triggered. The sensor (4) connected to the support element is brought from the first position (I) to the second position (II) or from the second position (II) to the first position (I).

In an embodiment of the invention, the helicopter (1) comprises at least one stopper (10) on the rail (8), which stops and fixes the actuator (9) in alignment with the wall of the cut out (3) in a position predetermined by the user, as the sensor (4) moves from the first position (I) to the second position (II) or from the second position (II) to the first position (I). The stopper (10) stops and fixes the sensor (4) at the boundary points of the first position (I) and the second position (II).

In an embodiment of the invention, the helicopter (1) comprises the actuator (9), which is one of the hydraulic, pneumatic, or electric motor type actuators.

In an embodiment of the invention, the helicopter (1) comprises the sheath (6) made of a water-resistant leather material. The sheath (6) is preferably made of a flame resistant (Flame Resistant Leather, Cassini 1789, Black) or water-resistant leather material.

In an embodiment of the invention, the helicopter (1) comprises the sensor (4) which is one of the laser warning system, missile warning system, or RWR spiral antenna. The sensor (4) can be any sensor (4) attached to the outer surface of the body (2) of the helicopter (1).

In an embodiment of the invention, the helicopter (1) comprises the support element (7) made of an aluminum alloy material by an NC production method. The support element (7) is preferably made of an aluminum alloy material, thereby having a high strength. The support element (7) provides rigidity to the sensor (4). The support element (7), which is connected to the sensor (4) with mechanical connection elements, is triggered by the actuator (9) and moves the sensor (4).

## Claims

1. A helicopter (1) comprising a body (2); a cut out (3) located on the body (2); a sensor (4) located in the cut out (3) configured to be moved outwards from the body (2), and enabling data requested by a user to be obtained; at least one control unit (5) that controls operation of the sensor (4); a first position (I) in which the sensor (4) is located in the cut out (3); a second position (II) to which the sensor (4) is brought by moving, and in which the sensor (4) extends through the cut out (3) outward from the body (2), a front surface (401) which is a part of the sensor (4) facing outward from the body (2), and which allows the sensor (4) to receive data; at least one lateral wall (402) located on the sensor (4), extending from the front surface (401) into the body (2), and allowing the front surface (401) to be held; a sheath (6) made of a flexible material, with one side thereof connected to the wall of the cut out (3) and the other side to the sensor (4) so as to completely surround the lateral walls (402), wherein the sheath (6) is configured to fold as the sensor (4) is moved from the second position (II) to the first position (I), wherein the sheath (6) provides sealing between the sensor (4) and the cut out in the first position (I) and the second position (II).

2. A helicopter (1) according to claim 1, wherein the sheath (6) is connected with one end to an inner wall of the cut out (3), and wherein the other end is connected between the front surface (401) and the lateral walls (402).

3. A helicopter (1) according to claim 1 or claim 2, wherein the front surface (401) is aligned with the wall of the cut out (3) when the sensor (4) is in the first position (I).

4. A helicopter (1) according to any of the above claims, wherein the sheath (6) is compressed when the sensor (4) is in the first position (I), such that there is no gap between the walls of the cut out (3) and the sensor (4), thus allowing the sensor (4) to be kept still in the cut out (3).

5. A helicopter (1) according to any of the above claims, wherein the front surface (401) allows the sensor (4) to obtain data both in the first position (I) and in the second position (II); and wherein the control unit (5) is configured to control the data received from the sensor (4).

6. A helicopter (1) according to any of the above claims, wherein a support element (7) is located almost partially around the lateral walls (402), attached to the sensor (4), and surrounded by the sheath (6); wherein at least one rail (8) in the cut out (3) allows the sensor (4) to slide thereon; wherein at least one actuator (9) is located in connection with the support element (7) and is configured to slide linearly on the rail (8); wherein the control unit (5) is configured to trigger the actuator (9) upon a command received by the pilot, wherein the actuator is mechanically connected to the support element (7), wherein the control unit (5) is configured to allow the sensor (4) to be moved from the first position (I) to the second position (II) or from the second position (II) to the first position (I).

7. A helicopter (1) according to claim 6, wherein at least one stopper (10) on the rail (8) is configured to stop and fix the actuator (9) in alignment with the wall of the cut out (3) in a position predetermined by the user, as the sensor (4) moves from the first position (I) to the second position (II) or from the second position (II) to the first position (I).

8. A helicopter (1) according to claim 6 or claim 7, wherein the actuator (9) is one of a hydraulic, pneumatic, or electric motor type actuator.

9. A helicopter (1) according to any of the above claims, wherein the sheath (6) is made of a water-resistant leather material.

10. A helicopter (1) according to any of the above claims, wherein the sensor (4) is one of a laser warning system, missile warning system, or RWR spiral antenna.

## Patentansprüche

1. Ein Hubschrauber (1), umfassend einen Rumpf (2); eine am Rumpf (2) angeordnete Aussparung (3); einen in der Aussparung (3) angeordneten Sensor (4), der so konfiguriert ist, dass er aus dem Rumpf (2) nach außen bewegt werden kann und die Erfassung der von einem Benutzer angeforderten Daten ermöglicht; mindestens eine Steuereinheit (5), die den Betrieb des Sensors (4) steuert; eine erste Position (I), in der sich der Sensor (4) in der Aussparung (3) befindet; eine zweite Position (II), in die der Sensor (4) durch Bewegung gebracht wird und in der sich der Sensor (4) durch die Aussparung (3) nach außen aus dem Rumpf (2) erstreckt; eine Vorderfläche (401), die ein Teil des Sensors (4) ist, vom Rumpf (2) nach außen gerichtet ist und dem Sensor (4) das Empfangen von Daten ermöglicht; mindestens eine am Sensor (4) angeordnete Seitenwand (402), die sich von der Vorderfläche (401) in den Rumpf (2) erstreckt und das Halten der Vorderfläche (401) ermöglicht; eine Hülle (6) aus einem flexiblen Material, deren eine Seite mit der Wand der Aussparung (3) und deren andere Seite mit dem Sensor (4) verbunden ist, um die Seitenwände (402) vollständig zu umschließen, wobei die Hülle (6) so konfiguriert ist, dass sie sich faltet, wenn der Sensor (4) von der zweiten Position (II) in die erste Position (I) bewegt wird, wobei die Hülle (6) in der ersten Position (I) und der zweiten Position (II) eine Abdichtung zwischen dem Sensor (4) und der Aussparung (3) bereitstellt.

2. Ein Hubschrauber (1) nach Anspruch 1, wobei die Hülle (6) mit einem Ende an einer Innenwand der Aussparung (3) verbunden ist und wobei das andere Ende zwischen der Vorderfläche (401) und den Seitenwänden (402) verbunden ist.

3. Ein Hubschrauber (1) nach Anspruch 1 oder Anspruch 2, wobei die Vorderfläche (401) mit der Wand der Aussparung (3) fluchtet, wenn sich der Sensor (4) in der ersten Position (I) befindet.

4. Ein Hubschrauber (1) nach einem der vorhergehenden Ansprüche, wobei die Hülle (6) zusammengedrückt wird, wenn sich der Sensor (4) in der ersten Position (I) befindet, sodass kein Spalt zwischen den Wänden der Aussparung (3) und dem Sensor (4) besteht, wodurch der Sensor (4) in der Aussparung (3) stillgehalten werden kann.

5. Ein Hubschrauber (1) nach einem der vorhergehenden Ansprüche, wobei die Vorderfläche (401) es dem Sensor (4) ermöglicht, Daten sowohl in der ersten Position (I) als auch in der zweiten Position (II) zu erfassen; und wobei die Steuereinheit (5) so konfiguriert ist, dass sie die vom Sensor (4) empfangenen Daten steuert.

6. Ein Hubschrauber (1) nach einem der vorstehenden Ansprüche, **dadurch gekennzeichnet, dass** ein Trägerelement (7) nahezu teilweise die Seitenwände (402) umschließt, am Sensor (4) befestigt und von der Hülle (6) umschlossen ist; wobei mindestens eine Schiene (8) in der Aussparung (3) das Gleiten des Sensors (4) ermöglicht; wobei mindestens ein Aktor (9) mit dem Trägerelement (7) verbunden und linear auf der Schiene (8) verschiebbar ist; wobei die Steuereinheit (5) den Aktor (9) auf ein vom Piloten empfangenes Kommando hin ansteuert, wobei der Aktor mechanisch mit dem Trägerelement (7) verbunden ist; wobei die Steuereinheit (5) die Bewegung des Sensors (4) von der ersten Position (I) zur zweiten Position (II) oder von der zweiten Position (II) zur ersten Position (I) ermöglicht.

7. Ein Hubschrauber (1) nach Anspruch 6, **dadurch gekennzeichnet, dass** mindestens ein Anschlag (10) auf der Schiene (8) so konfiguriert ist, dass er den Aktor (9) in einer vom Benutzer vorgegebenen, mit der Wand der Aussparung (3) fluchtenden Position anhält und fixiert, wenn sich der Sensor (4) von der ersten Position (I) zur zweiten Position (II) oder von der zweiten Position (II) zur ersten Position (I) bewegt.

8. Ein Hubschrauber (1) nach Anspruch 6 oder Anspruch 7, wobei der Aktor (9) ein hydraulischer, pneumatischer oder elektrischer Aktor vom Motortyp ist.

9. Ein Hubschrauber (1) nach einem der vorhergehenden Ansprüche, wobei die Hülle (6) aus einem wasserbeständigen Ledermaterial besteht.

10. Ein Hubschrauber (1) nach einem der vorhergehenden Ansprüche, wobei der Sensor (4) ein Laserwarnsystem, ein Raketenwarnsystem oder eine RWR-Spiralantenne ist.

## Revendications

1. Hélicoptère (1) comprenant un corps (2) ; une découpe (3) ménagée sur le corps (2) ; un capteur (4) disposé dans la découpe (3), configuré de manière à pouvoir être déplacé vers l'extérieur à partir du corps (2) et permettant d'obtenir les données demandées par un utilisateur ; au moins une unité de commande (5) commandant le fonctionnement du capteur (4) ; une première position (I) dans laquelle le capteur (4) est disposé dans la découpe (3) ; une seconde position (II) dans laquelle le capteur (4) est amené par déplacement et dans laquelle le capteur (4) s'étend à travers la découpe (3) vers l'extérieur à partir du corps (2) ; une surface avant (401), faisant partie du capteur (4), orientée vers l'extérieur à partir du corps (2) et permettant au capteur (4) de recevoir des données ; au moins une paroi latérale (402) disposée sur le capteur (4), s'étendant depuis la surface avant (401) vers l'intérieur du corps (2) et permettant le maintien de la surface avant (401) ; une gaine (6) réalisée en un matériau flexible, dont un côté est relié à la paroi de la découpe (3) et l'autre côté au capteur (4), de manière à entourer complètement les parois latérales (402), dans laquelle la gaine (6) est configurée de manière à se replier lorsque le capteur (4) est déplacé de la seconde position (II) vers la première position (I), ladite gaine (6) assurant l'étanchéité entre le capteur (4) et la découpe (3) dans la première position (I) et dans la seconde position (II).

2. Hélicoptère (1) selon la revendication 1, dans lequel la gaine (6) est reliée, par une extrémité, à une paroi intérieure de la découpe (3), et l'autre extrémité est reliée entre la surface avant (401) et les parois latérales (402).

3. Hélicoptère (1) selon la revendication 1 ou la revendication 2, dans lequel la surface avant (401) est alignée avec la paroi de la découpe (3) lorsque le capteur (4) est dans la première position (I).

4. Hélicoptère (1) selon l'une quelconque des revendications précédentes, dans lequel la gaine (6) est comprimée lorsque le capteur (4) est dans la première position (I), de sorte qu'il ne subsiste aucun espace entre les parois de la découpe (3) et le capteur (4), permettant ainsi de maintenir le capteur (4) immobile dans la découpe (3).

5. Hélicoptère (1) selon l'une quelconque des revendications précédentes, dans lequel la surface avant (401) permet au capteur (4) d'obtenir des données aussi bien dans la première position (I) que dans la seconde position (II) ; et dans lequel l'unité de commande (5) est configurée de manière à contrôler les données reçues du capteur (4).

6. Hélicoptère (1) selon l'une quelconque des revendications précédentes, dans lequel un élément de support (7) est disposé de manière à entourer au moins partiellement les parois latérales (402), est fixé au capteur (4) et est entouré par la gaine (6) ; dans lequel au moins un rail (8) disposé dans la découpe (3) permet au capteur (4) de coulisser sur celui-ci ; dans lequel au moins un actionneur (9) est disposé en liaison avec l'élément de support (7) et est configuré de manière à coulisser linéairement sur le rail (8) ; dans lequel l'unité de commande (5) est configurée de manière à déclencher l'actionneur (9) en réponse à une commande reçue du pilote ; dans lequel l'actionneur (9) est relié mécaniquement à l'élément de support (7), et dans lequel l'unité de commande (5) est configurée de manière à permettre le déplacement du capteur (4) de la première position (I) à la seconde position (II) ou de la seconde position (II) à la première position (I).

7. Hélicoptère (1) selon la revendication 6, dans lequel au moins une butée (10) disposée sur le rail (8) est configurée de manière à arrêter et à immobiliser l'actionneur (9), en alignement avec la paroi de la découpe (3), dans une position prédéterminée par l'utilisateur, lorsque le capteur (4) se déplace de la première position (I) à la seconde position (II) ou de la seconde position (II) à la première position (I).

8. Hélicoptère (1) selon la revendication 6 ou la revendication 7, dans lequel l'actionneur (9) est un actionneur de type hydraulique, pneumatique ou à moteur électrique.

9. Hélicoptère (1) selon l'une quelconque des revendications précédentes, dans lequel la gaine (6) est réalisée en un matériau en cuir résistant à l'eau.

10. Hélicoptère (1) selon l'une quelconque des revendications précédentes, dans lequel le capteur (4) est un système d'alerte laser, un système d'alerte missile ou une antenne spirale RWR.
